# EUROPEAN PATENT APPLICATION

(11) **EP 2 324 915 A1**
(43) Date of publication of application: **25.05.2011**
(21) Application number: 10174636.0
(22) Date of filing: 31.08.2010
(51) Int. Cl.: B01J 29/76, B01J 29/85, B01J 35/00, B01J 35/04, B01J 37/00, B01D 53/94

(54) **Honeycomb structure and exhaust gas converter**

(30) Priority: 19.11.2009 WO PCT/JP2009/069659
(71) Applicant: IBIDEN CO., LTD., Ogaki-shi Gifu 503-8604 (JP)
(72) Inventor: Kunieda, Masafumi, Gifu 501-0695 (JP); Yoshimura, Ken, Gifu 501-0695 (JP)
(74) Representative: HOFFMANN EITLE

(57) **Abstract**

A honeycomb structure includes at least one honeycomb unit having multiple through holes provided side by side along a longitudinal direction across partition walls. The honeycomb unit includes zeolite and an inorganic binder. The zeolite has a first portion ion-exchanged with a first metal and a second portion ion-exchanged with a second metal. The first metal is one or more selected from the group consisting of Cu, Mn, and Ag. The second metal is one or more selected from the group consisting of Fe, Ti, and Co. The honeycomb unit includes a first region and a second region other than the first region. The first region extends from one end of the honeycomb unit over more than or equal to 30% and less than or equal to 70% of the overall length of the honeycomb unit in its longitudinal direction. The mass content of the first metal is more than the mass content of the second metal in the first region. The mass content of the second metal is more than the mass content of the first metal in the second region.

## Description

### BACKGROUND OF THE INVENTION

### 1. Field of the Invention

The present invention relates to a honeycomb structure and an exhaust gas converter having the honeycomb structure.

### 2. Description of the Related Art

Conventionally, the SCR (Selective Catalytic Reduction) system, which reduces NOx to nitrogen and water using ammonia, is known as one of the systems for converting automobile exhaust gas.

Further, zeolite is known as a material that adsorbs ammonia in the SCR system.

Patent Document 1 discloses, as a method of converting NOx into a harmless product, preparing iron-containing ZSM-5 zeolite of an iron content of approximately 1 to 5 wt% and causing the zeolite to come into contact with a workstream containing NOx in the presence of ammonia at a temperature of at least approximately 200 °C.

Further, Patent Document 2 discloses a honeycomb structure where a honeycomb unit contains inorganic particles and inorganic fibers and/or whiskers, the inorganic particles being one or more selected from the group consisting of alumina, silica, zirconia, titania, ceria, mullite, and zeolite.
[Patent Document 1] Japanese Laid-Open Patent Application No. 9-103653
[Patent Document 2] International Publication Number WO 06/137149 pamphlet

However, in the case of using a honeycomb structure containing zeolite ion-exchanged with Fe in the SCR system, there is the problem of a lower NOx conversion rate than is expected from the amount of zeolite contained in the honeycomb structure. It is believed that this is because automobile exhaust gas generally has a wide temperature range of approximately 150 °C to approximately 750 °C, which includes a temperature range where the NOx conversion performance of the zeolite ion-exchanged with Fe is insufficient.

### SUMMARY OF THE INVENTION

In view of the above-described problem of the conventional art, the present invention has an object of providing a honeycomb structure and an exhaust gas converter capable of improving the NOx conversion rate in the SCR system.

According to a first aspect of the present invention, a honeycomb structure includes at least one honeycomb unit having a plurality of through holes provided side by side along a longitudinal direction across partition walls, the honeycomb unit including zeolite and an inorganic binder, wherein the zeolite has a first portion ion-exchanged with a first metal and a second portion ion-exchanged with a second metal, the first metal being one or more selected from the group consisting of Cu, Mn, and Ag and the second metal being one or more selected from the group consisting of Fe, Ti, and Co, the honeycomb unit includes a first region and a second region other than the first region, the first region extending from one end of the honeycomb unit over more than or equal to 30% and less than or equal to 70% of an overall length of the honeycomb unit in a longitudinal direction thereof, and a mass content of the first metal is more than a mass content of the second metal in the first region, and the mass content of the second metal is more than the mass content of the first metal in the second region.

It is desirable that a ratio of a mass of the first metal to a total mass of the first metal and the second metal be more than or equal to 0.80 and less than or equal to 1.00 in the first region and that a ratio of a mass of the second metal to the total mass of the first metal and the second metal be more than or equal to 0.80 and less than or equal to 1.00 in the second region.

It is desirable that the zeolite be at least one selected from the group consisting of β-zeolite, zeolite ZSM-5, and phosphate-based zeolite.

It is desirable that the phosphate-based zeolite be at least one selected from the group consisting of a SAPO, a MeAPO, and a MeAPSO.

It is desirable that the SAPO be at least one selected from the group consisting of a SAPO―5, a SAPO―11, and a SAPO-34.

It is desirable that the inorganic binder be a solids content contained in at least one selected from the group consisting of alumina sol, silica sol, titania sol, water glass, sepiolite, attapulgite, and boehmite.

It is desirable that the honeycomb unit further include at least one of inorganic fibers and flakes.

It is desirable that the inorganic fibers be at least one selected from the group consisting of alumina, silica, silicon carbide, silica alumina, glass, potassium titanate, and aluminum borate and that the flakes be at least one selected from the group consisting of glass, muscovite, alumina, silica, and zinc oxide.

It is desirable that the honeycomb structure include a plurality of honeycomb units.

According to a second aspect of the present invention, an exhaust gas converter includes the honeycomb structure according to the first aspect of the present invention.

It is desirable that the second region of the honeycomb unit included in the honeycomb structure be positioned on a downstream side in a direction in which an exhaust gas flows in the exhaust gas converter.

According to aspects of the present invention, it is possible to provide a honeycomb structure and an exhaust gas converter capable of improving NOx conversion rate in the SCR system.

### BRIEF DESCRIPTION OF THE DRAWINGS

FIG. 1 is a perspective view of a honeycomb structure according to an embodiment of the present invention;
FIG. 2 is a cross-sectional view of an exhaust gas converter according to the embodiment of the present invention;
FIG. 3 is a perspective view of a variation of the honeycomb structure according to the embodiment of the present invention; and
FIG. 4 is a perspective view of a honeycomb unit of the honeycomb structure of FIG. 3 according to the embodiment of the present invention.

### DETAILED DESCRIPTION OF THE PREFERRED EMBODIMENTS

Next, a description is given with the drawings of an embodiment for carrying out the present invention.

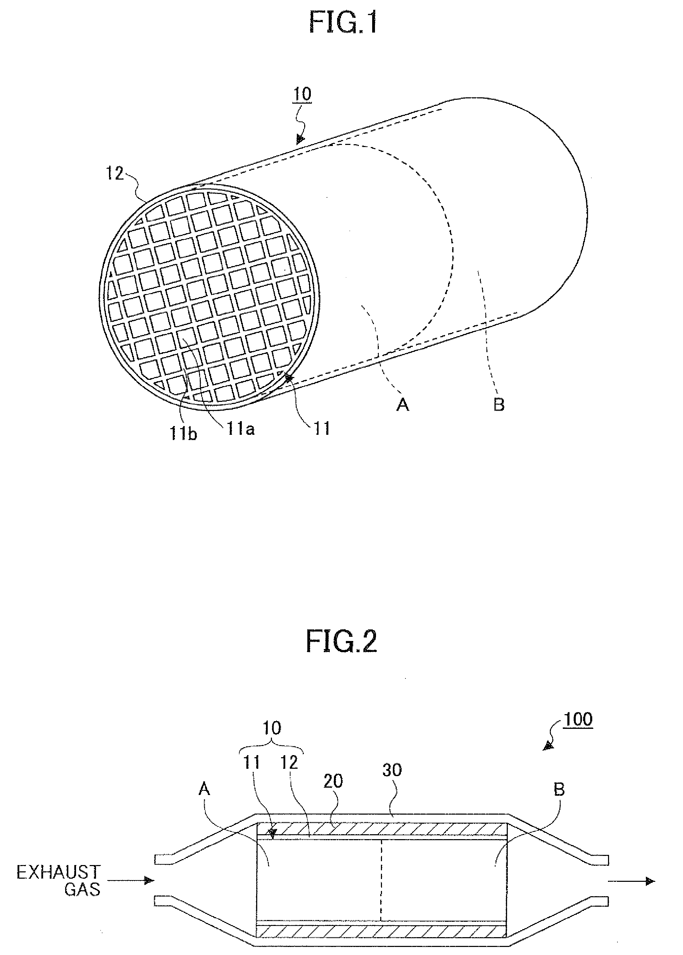

FIG. 1 illustrates a honeycomb structure according to an embodiment of the present invention, and FIG. 2 illustrates an exhaust gas converter according to the embodiment of the present invention. A honeycomb structure 10 includes a single honeycomb unit 11 containing zeolite and an inorganic binder.The honeycomb unit 11 has multiple through holes 11a provided side by side along a longitudinal direction across partition walls 11b. The honeycomb structure 10 further includes a peripheral coat layer 12 formed on the peripheral surface of the honeycomb unit 11.

The zeolite includes zeolite ion-exchanged with a first metal and zeolite ion-exchanged with a second metal. The first metal is one or more selected from the group consisting of Cu, Mn, Ag, and V. The second metal is one or more selected from the group consisting of Fe, Ti, and Co. The zeolite may further include zeolite subjected to no ion exchange and/or zeolite ion-exchanged with a metal other than those described above.

In the honeycomb unit 11, the mass content of the first metal is more than the mass content of the second metal in a first region A, which extends from one end of the honeycomb unit 11 in its longitudinal direction for 30% to 70% of its overall length, and the mass content of the second metal is more than the mass content of the first metal in a second region B, which is the region other than the first region A.

The boundary between the first region A and the second region B of the honeycomb unit 11 is a plane across which the mass content of the first metal and the mass content of the second metal, measured by conducting ICP emission spectrometry, are inverted. If there is a region where the mass content of the first metal and the mass content of the second metal are equal, the middle position of the region where the first and second metals are equal in mass content is determined as the boundary between the first region A and the second region B.

On the other hand, generally, automobile exhaust gas has a wide temperature range of approximately 150 °C to approximately 750 °C. Therefore, exhaust gas converters are desired to be high in NOx conversion performance in both a low temperature range (for example, 150 °C to 250 °C) and a high temperature range (more than or equal to 500 °C) .

It is believed that the zeolite ion-exchanged with the first metal is high in NOx conversion performance in the low temperature range and the zeolite ion-exchanged with the second metal is high in NOx conversion performance in the high temperature range. Accordingly, an exhaust gas converter 100 (FIG. 2) having the honeycomb structure 10 is believed to be high in NOx conversion performance in both the low temperature range and the high temperature range.

As illustrated in FIG. 2, it is preferable to have the second region B positioned on the downstream side in a direction in which exhaust gas flows in the honeycomb unit 11. The NOx conversion rate may be lower in the case of positioning the second region B on the upstream side in the exhaust gas flowing direction in the honeycomb unit 11 than in the case of positioning the second region B on the downstream side in the exhaust gas flowing direction in the honeycomb unit 11. This is because the zeolite ion-exchanged with the second metal, which is believed to be high in NOx conversion performance in the high temperature range, is generally reduced in NOx conversion performance at or beyond approximately 500 °C. The exhaust gas is lower in temperature on the downstream side than on the upstream side in the exhaust gas flowing direction of the exhaust gas converter 100. Therefore, it is believed to be possible to prevent reduction in the NOx conversion performance of the zeolite ion-exchanged with the second metal by positioning the second region B on the downstream side in the exhaust gas flowing direction in the honeycomb unit 11.

The exhaust gas converter 100 is obtained by canning the honeycomb structure 10 into a metal pipe 30 with a holding sealing member 20 provided around the honeycomb structure 10. Further, ejecting means (not graphically illustrated) such as an eject nozzle for ejecting ammonia or its precursor is provided on the upstream side of the honeycomb structure 10 in the exhaust gas flowing direction in the exhaust gas converter 100. As a result, ammonia is added to the exhaust gas, so that NOx contained in the exhaust gas is reduced on the zeolite contained in the honeycomb unit 11. Considering the stability of storage of ammonia or its precursor, it is preferable to use urea water as a precursor of ammonia. Urea water is hydrolyzed by being heated in exhaust gas so as to generate ammonia.

In the first region A of the honeycomb unit 11, the ratio of the mass of the first metal to the total mass of the first metal and the second metal is preferably 0.80 to 1.00, and more preferably, 0.90 to 1.00. If this ratio is less than 0.80, the NOx conversion rate may be reduced.

In the second region B of the honeycomb unit 11, the ratio of the mass of the second metal to the total mass of the first metal and the second metal is preferably 0.80 to 1.00, and more preferably, 0.90 to 1.00. If this ratio is less than 0.80, the NOx conversion rate may be reduced.

In the honeycomb unit 11, it is preferable that the amount of ion exchange of the zeolite ion-exchanged with the first metal and the amount of ion exchange of the zeolite ion-exchanged with the second metal be independently 1.0 mass% to 5.0 mass%. If the amount of ion exchange is less than 1.0 mass%, the NOx conversion performance may be insufficient. On the other hand, if the amount of ion exchange exceeds 5.0 mass%, metal to be subjected to ion exchange is present as an oxide and is less likely to be subjected to further ion exchange.

Zeolite is not limited in particular, and may be β-zeolite, zeolite ZSM-5, phosphate-based zeolite, etc. Two or more of them may be used together. Of these, phosphate-based zeolite, whose NOx conversion performance is high, is preferable.

Examples of phosphate-based zeolite include SAPOs such as a SAPO―5, a SAPO―11, and a SAPO―34, MeAPOs, and MeAPSOs.

The average particle size of the primary particles or secondary particles of zeolite is preferably 0.5 µm to 10 µm, and more preferably, 1 µm to 5 µm If the primary particles or secondary particles of zeolite are less than 0.5 µm in average particle size, exhaust gas is less likely to penetrate into the partition walls 11b, so that zeolite may not be used effectively for NOx conversion. On the other hand, if the primary particles or secondary particles of zeolite are more than 10 µm in average particle size, the number of pores in the honeycomb unit 11 is reduced. As a result, exhaust gas is less likely to penetrate into the partition walls 11b, so that zeolite may not be used effectively for NOx conversion.

The zeolite content per apparent volume of the honeycomb unit 11 is preferably 230 g/L to 360 g/L. If the zeolite content per apparent volume of the honeycomb unit 11 is less than 230 g/L, it may be necessary to increase the apparent volume of the honeycomb unit 11 in order to improve the NOx conversion rate. On the other hand, if the zeolite content per apparent volume of the honeycomb unit 11 exceeds 360 g/L, the strength of the honeycomb unit 11 may be insufficient.

The inorganic binder contained in the honeycomb unit 11 is not limited in particular, and may be a solids content contained in alumina sol, silica sol, titania sol, water glass, sepiolite, attapulgite, boehmite, etc. Two or more of them may be used together.

The inorganic binder content of the honeycomb unit 11 is preferably 5 mass% to 30 mass% as a solids content, and more preferably, 10 mass% to 20 mass% as a solids content. If the inorganic binder content is less than 5 mass% as a solids content, the strength of the honeycomb unit 11 may be reduced. On the other hand, if the inorganic binder content exceeds 30 mass% as a solids content, it may be difficult to perform extrusion molding of the honeycomb unit 11.

It is preferable that the honeycomb unit 11 further include inorganic fibers and/or flakes.

The inorganic fibers contained in the honeycomb unit 11 are not limited in particular as long as the inorganic fibers can increase the strength of the honeycomb unit 11, and may be alumina, silica, silicon carbide, silica alumina, glass, potassium titanate, aluminum borate, etc. Two or more of them may be used together.

The aspect ratio of the inorganic fibers is preferably 2 to 1000, more preferably 5 to 800, and still more preferably 10 to 500. If the aspect ratio is less than 2, the effect of increasing the strength of the honeycomb unit 11 may be reduced. On the other hand, if the aspect ratio exceeds 1000, clogging may occur in a die at the time of the extrusion molding of the honeycomb unit 11 or the inorganic fibers may break to reduce the effect of increasing the strength of the honeycomb unit 11.

The flakes contained in the honeycomb unit 11 are not limited in particular as long as the flakes can increase the strength of the honeycomb unit 11, and may be glass, muscovite, alumina, silica, zinc oxide, etc. Two or more of them may be used together.

The inorganic fibers and flakes content of the honeycomb unit 11 is preferably 3 mass% to 50 mass%, more preferably 3 mass% to 30 mass%, and still more preferably 5 mass% to 20 mass%. If the inorganic fibers and flakes content is less than 3 mass%, the effect of increasing the strength of the honeycomb unit 11 may be reduced. On the other hand, if the inorganic fibers and flakes content exceeds 50 mass%, the zeolite content of the honeycomb unit 11 decreases so that the NOx conversion rate may be reduced.

The honeycomb unit 11 preferably has a porosity of 25% to 40%. If the porosity of the honeycomb unit 11 is less than 25%, exhaust gas is less likely to penetrate into the partition walls 11b, so that zeolite may not be used effectively for NOx conversion. On the other hand, if the porosity of the honeycomb unit 11 exceeds 40%, the strength of the honeycomb unit 11 may be insufficient.

The porosity may be measured using mercury intrusion porosimetry.

The honeycomb unit 11 preferably has an opening ratio of 50% to 75% in a cross section perpendicular to its longitudinal direction. If the opening ratio of the cross section perpendicular to the longitudinal direction of the honeycomb unit 11 is less than 50%, zeolite may not be used effectively for NOx conversion. On the other hand, if the opening ratio of the cross section perpendicular to the longitudinal direction of the honeycomb unit 11 exceeds 75%, the strength of the honeycomb unit 11 may be insufficient.

The density of the through holes 11a of the honeycomb unit 11 in a cross section perpendicular to its longitudinal direction is preferably 31 cells/cm² to 124 cells/cm². If the density of the through holes 11a of the cross section perpendicular to the longitudinal direction of the honeycomb unit 11 is less than 31 cells/cm², exhaust gas and zeolite are less likely to make contact, so that the NOx conversion rate may be reduced. On the other hand, if the density of the through holes 11a of the cross section perpendicular to the longitudinal direction of the honeycomb unit 11 exceeds 124 cells/cm², the pressure loss of the honeycomb structure 10 may increase.

The partition walls 11b of the honeycomb unit 11 are preferably 0.10 mm to 0.50 mm, and more preferably, 0.15 mm to 0.35 mm in thickness. If the partition walls 11b are less than 0.10 mm in thickness, the strength of the honeycomb unit 11 may be reduced. On the other hand, if the partition walls 11b exceed 0.50 mm in thickness, exhaust gas is less likely to penetrate into the partition walls 11b, so that zeolite may not be used effectively for NOx conversion.

The peripheral coat layer 12 is preferably 0.1 mm to 2 mm in thickness. If the peripheral coat layer 12 is less than 0.1 mm in thickness, the effect of increasing the strength of the honeycomb structure 10 may be insufficient. On the other hand, if the peripheral coat layer 12 is more than 2 mm in thickness, the zeolite content per unit volume of the honeycomb structure 10 is reduced, so that the NOx conversion rate may be reduced.

The honeycomb structure 10, which has a cylindrical shape, is not limited to a particular shape, and may have a rectangular pillar shape, a cylindroid shape, etc. Further, the through holes 11a, which have a quadrangular pillar shape, are not limited to a particular shape, and may have a triangular pillar shape, a hexagonal pillar shape, etc.

Next, a description is given of a method of manufacturing the honeycomb structure 10 of the embodiment of the present invention. First, a raw cylindrical honeycomb molded body having multiple through holes provided side by side along a longitudinal direction across partition walls is manufactured by extrusion molding using raw material paste including zeolite and an inorganic binder and further including inorganic fibers and/or flakes as required. This allows the cylindrical honeycomb unit 11 with sufficient strength to be obtained even with low firing temperatures.

The inorganic binder included in the raw material paste is added as alumina sol, silica sol, titania sol, water glass, sepiolite, attapulgite, boehmite, etc. Two or more of them may be used together.

An organic binder, a dispersion medium, a molding aid, etc., may be suitably added to the raw material paste as required.

The organic binder is not limited in particular, and may be methylcellulose, carboxymethylcellulose, hydroxyethylcellulose, polyethylene glycol, phenolic resin, epoxy resin, etc. Two or more of them may be used together. The amount of addition of the organic binder is preferably 1% to 10% of the total mass of zeolite, an inorganic binder, inorganic fibers and flakes.

The dispersion medium is not limited in particular, and may be water, an organic solvent such as benzene, alcohol such as methanol, etc. Two or more of them may be used together.

The molding aid is not limited in particular, and may be ethylene glycol, dextrin, a fatty acid, fatty acid soap, polyalcohol, etc. Two or more of them may be used in particular.

It is preferable to mix and knead the raw material paste in its preparation. The raw material paste may be mixed using a mixer, an attritor or the like, and may be kneaded using a kneader or the like.

Next, the obtained honeycomb molded body is dried using one or more drying apparatus such as a microwave drying apparatus, a hot air drying apparatus, a dielectric drying apparatus, a reduced-pressure drying apparatus, a vacuum drying apparatus, and a freeze drying apparatus.

Further, the obtained dried honeycomb molded body is degreased. The conditions for degreasing, which are not limited in particular and may be selected suitably in accordance with the kind and the amount of organic matter included in the molded body, are preferably 400 °C and 2 hours.

Next, the cylindrical honeycomb unit 11 is obtained by firing the obtained degreased honeycomb molded body. The firing temperature is preferably 600 °C to 1200 °C, and more preferably 600 °C to 1000 °C. It the firing temperature is less than 600 °C, sintering is prevented from progressing so that the strength of the honeycomb unit 11 may be reduced. On the other hand, if the firing temperature exceeds 1200 °C, sintering progresses excessively so that the reaction sites of zeolite may be reduced.

Next, peripheral coat layer paste is applied on the peripheral surface of the cylindrical honeycomb unit 11.

The peripheral coat layer paste is not limited in particular, and may be a mixture of an inorganic binder and inorganic particles, a mixture of an inorganic binder and inorganic fibers, and a mixture of an inorganic binder, inorganic particles, and inorganic fibers, etc.

The peripheral coat layer paste may further contain an organic binder. The organic binder is not limited in particular, and may be polyvinyl alcohol, methylcellulose, ethylcellulose, carboxymethylcellulase, etc. Two or more of them may be used together.

Next, the honeycomb unit 11 with the peripheral coat layer paste applied is dried and solidified so that the cylindrical honeycomb structure 10 is obtained. At this point, it is preferable to perform degreasing if the peripheral coat layer paste includes an organic binder. The conditions for degreasing, which may be suitably selected in accordance with the kind and the amount of the organic binder, are preferably 700 °C and 20 minutes.

The zeolite of the honeycomb unit 11 may be subjected to ion exchange by immersing the first region A and the second region B of the honeycomb unit 11 in an aqueous solution containing cations of the first metal and an aqueous solution containing cations of the second metal, respectively. At this point, the entire region of the honeycomb unit 11 may be immersed in the aqueous solution containing cations of the first metal (or cations of the second metal), and thereafter, the second region B (or the first region A) may be immersed in the aqueous solution containing cations of the second metal (or cations of the first metal).

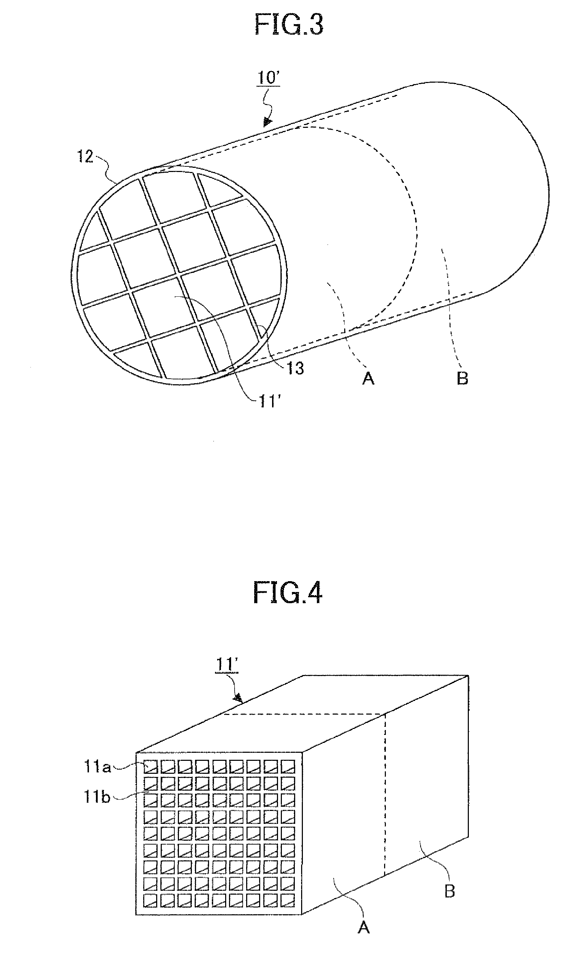

FIG. 3 illustrates a variation of the honeycomb structure 10 of the embodiment of the present invention. A honeycomb structure 10' is the same as the honeycomb structure 10 except that multiple honeycomb units 11' (FIG. 4) having the multiple through holes 11a provided side by side along a longitudinal direction across the partition walls 11b are bonded with an adhesive layer 13 interposed between the honeycomb units 11'.

Referring to FIG. 4, the honeycomb unit 11' preferably has a cross-sectional area of 5 cm² to 50 cm² in a cross section perpendicular to its longitudinal direction. If the cross-sectional area of the cross section perpendicular to the longitudinal direction of the honeycomb unit 11' is less than 5 cm², the pressure loss of the honeycomb structure 10' may increase. On the other hand, if the cross-sectional area of the cross section perpendicular to the longitudinal direction of the honeycomb unit 11' exceeds 50 cm², the strength of the honeycomb unit If against a thermal stress generated in the honeycomb unit 11' may be insufficient.

The adhesive layer 13 is preferably 0.5 mm to 2 mm in thickness. If the adhesive layer 13 is less than 0.5 mm in thickness, the strength of adhesion may be insufficient. On the other hand, if the adhesive layer 13 exceeds 2 mm in thickness, the pressure loss of the honeycomb structure 10' may increase.

The honeycomb unit 11', if not positioned in the peripheral portion of the honeycomb structure 10', has a rectangular pillar shape, but is not limited to a particular shape and may have, for example, a hexagonal pillar shape or the like.

Next, a description is given of a method of manufacturing the honeycomb structure 10' of the embodiment of the present invention. First, the quadrangular-pillar-shaped honeycomb units 11' are manufactured in the same manner as the honeycomb unit 11 of the honeycomb structure 10. Next, adhesive layer paste is applied on peripheral surfaces of the honeycomb units 11', and the honeycomb units 11' are successively bonded. Then, the honeycomb units 11' are dried and solidified, so that an aggregate of the honeycomb units 11' is manufactured.

At this point, the aggregate of the honeycomb units 11' may be cut into a cylindrical shape and ground after its manufacture. The aggregate of the honeycomb units 11' having a cylindrical shape may be manufactured by bonding honeycomb units 11' whose cross sections are fan-shaped and honeycomb units 11' whose cross sections are square.

The adhesive layer paste is not limited in particular, and may be a mixture of an inorganic binder and inorganic particles, a mixture of an inorganic binder and inorganic fibers, and a mixture of an inorganic binder, inorganic particles, and inorganic fibers, etc.

The adhesive layer paste may contain an organic binder. The organic binder is not limited in particular, and may be polyvinyl alcohol, methylcellulose, ethylcellulose, carboxymethylcellulose, etc. Two or more of them may be used together.

Next, peripheral coat layer paste is applied on the peripheral surface of the cylindrical aggregate of the honeycomb units 11'.The peripheral coat layer paste is not limited in particular, and may contain the same materials as or different materials from the adhesive layer paste. The peripheral coat layer paste may have the same composition as the adhesive layer paste.

Next, the aggregate of the honeycomb units 11' having the peripheral coat layer paste applied is dried and solidified so that the cylindrical honeycomb structure 10' is obtained. At this point, it is preferable to perform degreasing if the adhesive layer paste and/or the peripheral coat layer paste includes an organic binder. The conditions for degreasing, which may be suitably selected in accordance with the kind and the amount of the organic binder, are preferably 700 °C and 20 minutes.

The honeycomb structures 10 and 10' may be without the peripheral coat layer 12.

### [Examples]

### [Example 1]

First, raw material paste 1 was prepared by mixing and kneading 3100 g of a SAPO of 3 µm. in average particle size, 895 g of boehmite, 485 g of alumina fibers of 6 µm in average fiber diameter and 100 µm in average fiber length, 380 g of methylcellulose, 280 g of an oleic acid, and 2425 g of ion-exchanged water.

Next, the raw material paste 1 was subjected to extrusion molding using an extruder, so that raw honeycomb molded bodies of a square pillar shape were manufactured. Then, the honeycomb molded bodies were dried at 110 °C for 10 minutes using a microwave drying apparatus and a hot air drying apparatus, and were thereafter degreased at 400 °C for 5 hours. Next, the degreased honeycomb molded bodies were fired at 700 °C for 2 hours, so that honeycomb units 11' having a square pillar shape of 34.3 mm square and 150 mm in length were manufactured. The honeycomb units 11' had a through hole 11a density of 93 cells/cm² and a partition wall 11b thickness of 0.23 mm.

Next, the SAPO was subjected to ion exchange by successively immersing one end portion and the other end portion of each of the honeycomb units 11' in an aqueous copper nitrate solution and an aqueous ferric nitrate solution, respectively.

According to an ICP emission spectrometry using an ICPS-8100 (manufactured by Shimadzu Corporation), the volume ratio of the first region A and the second region B of the honeycomb unit 11' was 1:1. Further, the amounts of ion exchange of the SAPO in the first region A and the second region B were 2.7 mass% each. In each of the first region A and the second region B of the honeycomb unit 11', the amount of ion exchange of the SAPO was measured in a region from the end that was less than or equal to 25% of the overall length of the honeycomb unit 11' in its longitudinal direction because the SAPO ion-exchanged with Cu ions and the SAPO ion-exchanged with Fe ions might be included around the boundary between the first region A and the second region B. Further, in the first region A, the ratio of the mass of Cu to the total mass of Cu and Fe was 1, and in the second region B, the ratio of the mass of Fe to the total mass of Cu and Fe was 1.

Next, heat-resisting adhesive layer paste was prepared by mixing and kneading 767 g of alumina fibers of 0.5 µm in average fiber diameter and 15 µm in average fiber length, 2500 g of silica glass, 17 g of carboxymethylcellulose, 600 g of silica sol of a solids content of 30 wt%, 167 g of polyvinyl alcohol, 167 g of a surfactant, and 17 g of alumina balloons.

The adhesive layer paste was applied so as to have an adhesive layer of 2 mm in thickness, and 16 honeycomb units 11' were bonded. After drying and solidifying the adhesive layer paste at 150 °C for 10 minutes, the honeycomb units 11' were cut into a cylindrical shape using a diamond cutter so that its cross section perpendicular to a longitudinal direction was substantially symmetrical with respect to a point, thereby manufacturing an aggregate of the honeycomb units 11'.

Further, the adhesive layer paste was applied on the peripheral surface of the aggregate of the honeycomb units 11' so as to have a peripheral coat layer of 1 mm in thickness. Thereafter, the adhesive layer paste was dried and solidified at 150 °C for 10 minutes using a microwave drying apparatus and a hot air drying apparatus, and was degreased at 400 °C for 2 hours, so that a cylindrical honeycomb structure 10' of 143.8 mm in diameter and 150 mm in length was manufactured.

Next, the honeycomb structure 10' was canned in the metal pipe (shell) 30 with the holding sealing member 20 (a mat formed of inorganic fibers) provided around the honeycomb structure 10', thereby manufacturing an exhaust gas converter (see FIG. 2). At this point, the first regions A of the honeycomb units 11' included in the honeycomb structure 10' were positioned on the upstream side in the exhaust gas flowing direction.

### [Example 2]

A honeycomb structure 10' and an exhaust gas converter were manufactured in the same manner as in Example 1 except that the volume ratio of the first region A and the second region B of each of the honeycomb units 11' was changed to 7:3.

### [Example 3]

A honeycomb structure 10' and an exhaust gas converter were manufactured in the same manner as in Example 1 except that the volume ratio of the first region A and the second region B of each of the honeycomb units 11' was changed to 3:7.

### [Example 4]

Raw material paste 2 was prepared by mixing and kneading 3000 g of β-zeolite of 3 µm in average particle size, 840 g of boehmite, 650 g of alumina fibers of 6 µm in average fiber diameter and 100 µm in average fiber length, 330 g of methylcellulose, 330 g of an oleic acid, and 1800 g of ion-exchanged water.

A honeycomb structure 10' and an exhaust gas converter were manufactured in the same manner as in Example 1 except for using the raw material paste 2 in place of the raw material paste 1.

### [Example 5]

A honeycomb structure 10' and an exhaust gas converter were manufactured in the same manner as in Example 4 except that the volume ratio of the first region A and the second region B of each of the honeycomb units 11' was changed to 7:3.

### [Example 6]

A honeycomb structure 10' and an exhaust gas converter were manufactured in the same manner as in Example 4 except that the volume ratio of the first region A and the second region B of each of the honeycomb units 11' was changed to 3:7.

### [Example 7]

A honeycomb structure 10' and an exhaust gas converter were manufactured in the same manner as in Example 1 except that the first regions A of the honeycomb units 11' included in the honeycomb structure 10' were positioned on the downstream side in the exhaust gas flowing direction.

### [Comparative Example 1]

A honeycomb structure and an exhaust gas converter were manufactured in the same manner as in Example 1 except that the volume ratio of the first region A and the second region B of each honeycomb unit was changed to 10:0.

The honeycomb structures and the honeycomb units of Comparative Example 1 and the following comparative examples are not assigned reference numerals in order to distinguish them from the honeycomb structure 10' and the honeycomb units 11' according to the embodiment of the present invention.

### [Comparative Example 2]

A honeycomb structure and an exhaust gas converter were manufactured in the same manner as in Example 4 except that the volume ratio of the first region A and the second region B of each honeycomb unit was changed to 0:10.

### [Comparative Example 3]

A honeycomb structure and an exhaust gas converter were manufactured in the same manner as in Example 1 except that the volume ratio of the first region A and the second region B of each honeycomb unit was changed to 8:2.

### [Comparative Example 4]

A honeycomb structure and an exhaust gas converter were manufactured in the same manner as in Example 4 except that the volume ratio of the first region A and the second region B of each honeycomb unit was changed to 2:8.

### [Measurement of NOx Conversion Rate]

Samples for evaluation were obtained from the honeycomb structures 10' manufactured in Examples 1 through 7 by cutting out portions (34.3 mm square and 40 mm in length) of their respective square-pillar-shaped honeycomb units 11' and from the honeycomb structures manufactured in Comparative Examples 1 through 4 by cutting out portions (34.3 mm square and 40 mm in length) of their respective square-pillar-shaped honeycomb units.

With respect to each of the samples for evaluation, the outflow of nitrogen monoxide (NO) flowing out of the sample for evaluation was measured using a catalyst evaluator SIGU (manufactured by HORIBA, Ltd.) while causing a simulated gas of 150 °C and a simulated gas of 600 °C to flow through the honeycomb units at a space velocity (SV) of 35,000/hr, and the NOx conversion rate [%] expressed by (NO inflow - NO outflow)/(NO inflow) x 100 was measured. The constituents of the simulated gases are 175 ppm of nitrogen monoxide, 175 ppm of nitrogen dioxide, 350 ppm of ammonia, 14 vol% of oxygen, 5 vol% of carbon dioxide, 10 vol% of water, and nitrogen (balance). TABLE 1 illustrates the measurement results.

**TABLE 1**

| | **ZEOLITE** | **VOLUME RATIO** | | **NOx CONVERSION RATE [%]** | |
|---|---|---|---|---|---|
| | | **FIRST REGION** | **SECOND REGION** | **150°C** | **600°C** |
| **EXAMPLE 1** | **SAPO** | **5** | **5** | **62** | **78** |
| **EXAMPLE 2** | **SAPO** | **7** | **3** | **65** | **73** |
| **EXAMPLE 3** | **SAPO** | **3** | **7** | **55** | **82** |
| **EXAMPLE 4** | *β* | **5** | **5** | **42** | **79** |
| **EXAMPLE 5** | *β* | **7** | **3** | **46** | **76** |
| **EXAMPLE 6** | *β* | **3** | **7** | **40** | **84** |
| **EXAMPLE 7** | **SAPO** | **5** | **5** | **54** | **70** |
| **COMPARATIVE EXAMPLE 1** | **SAPO** | **10** | **0** | **68** | **54** |
| **COMPARATIVE EXAMPLE 2** | *β* | **0** | **10** | **18** | **85** |
| **COMPARATIVE EXAMPLE 3** | **SAPO** | **8** | **2** | **65** | **59** |
| **COMPARATIVE EXAMPLE 4** | *β* | **2** | **8** | **25** | **84** |

TABLE 1 shows that the honeycomb units 11' (the honeycomb structures 10') of Examples 1 through 7 maintain the NOx conversion rate at 600 °C at 70% or more while maintaining the NOx conversion rate at 150 °C at 40% or more.

Thus, it is believed that the honeycomb structure 10' and the exhaust gas converter according to this embodiment enjoy high NOx conversion rates in both low temperature and high temperature regions because in the individual honeycomb units 11', the mass content of the first metal is more than the mass content of the second metal in the first region A, which extends from one end of the honeycomb unit 11' in its longitudinal direction to be 30% to 70% of its overall length, and the mass content of the second metal is more than the mass content of the first metal in the second region B, which is the region other than the first region A. As a result, it is believed, the honeycomb structure 10' and the exhaust gas converter are capable of improving the NOx conversion rate in the SCR system.

Comparing the honeycomb structures 10' of Examples 1 through 6 and the honeycomb structure 10' of Example 7, it is believed to be desirable that the second region B of the honeycomb unit 11' be positioned on the downstream side in the exhaust gas flowing direction.

In this embodiment, the measurement results are shown for the honeycomb structure 10'. It is believed, however, that the same effects can be produced with respect to the honeycomb structure 10.

## Claims

1. A honeycomb structure including at least one honeycomb unit having a plurality of through holes provided side by side along a longitudinal direction across partition walls, the honeycomb unit including zeolite and an inorganic binder, **characterized in that**:
the zeolite has a first portion ion-exchanged with a first metal and a second portion ion-exchanged with a second metal, the first metal being one or more selected from the group consisting of Cu, Mn, and Ag and the second metal being one or more selected from the group consisting of Fe, Ti, and Co,
the honeycomb unit includes a first region and a second region other than the first region, the first region extending from one end of the honeycomb unit over more than or equal to 30% and less than or equal to 70% of an overall length of the honeycomb unit in a longitudinal direction thereof, and
a mass content of the first metal is more than a mass content of the second metal in the first region, and the mass content of the second metal is more than the mass content of the first metal in the second region.

2. The honeycomb structure as claimed in claim 1, **characterized in that**:
a ratio of a mass of the first metal to a total mass of the first metal and the second metal is more than or equal to 0.80 and less than or equal to 1.00 in the first region, and
a ratio of a mass of the second metal to the total mass of the first metal and the second metal is more than or equal to 0.80 and less than or equal to 1.00 in the second region.

3. The honeycomb structure as claimed in claim 1 or 2, **characterized in that**:
the zeolite is at least one selected from the group consisting of β-zeolite, zeolite ZSM-5, and phosphate-based zeolite.

4. The honeycomb structure as claimed in claim 3, **characterized in that**:
the phosphate-based zeolite is at least one selected from the group consisting of a SAPO, a MeAPO, and a MeAPSO.

5. The honeycomb structure as claimed in claim 4, **characterized in that**:
the SAPO is at least one selected from the group consisting of a SAPO-5, a SAPO-11, and a SAPO-34.

6. The honeycomb structure as claimed in any of claims 1 to 5, **characterized in that**:
the inorganic binder is a solids content contained in at least one selected from the group consisting of alumina sol, silica sol, titania sol, water glass, sepiolite, attapulgite, and boehmite.

7. The honeycomb structure as claimed in any of claims 1 to 6, **characterized in that**:
the honeycomb unit further includes at least one of inorganic fibers and flakes.

8. The honeycomb structure as claimed in claim 7, **characterized in that**:
the inorganic fibers are at least one selected from the group consisting of alumina, silica, silicon carbide, silica alumina, glass, potassium, titanate, and aluminum borate, and
the flakes are at least one selected from the group consisting of glass, muscovite, alumina, silica, and zinc oxide.

9. The honeycomb structure as claimed in any of claims 1 to 8, **characterized in that**:
the honeycomb structure includes a plurality of honeycomb units.

10. An exhaust gas converter, **characterized by**:
the honeycomb structure as set forth in any of claims 1 to 9.

11. The exhaust gas converter as claimed in claim 10, **characterized in that**:
the second region of the honeycomb unit included in the honeycomb structure is positioned on a downstream side in a direction in which an exhaust gas flows.
